# EUROPÄISCHE PATENTANMELDUNG

(11) **EP 1 972 507 A1**
(43) Veröffentlichungstag der Anmeldung: **24.09.2008**
(21) Anmeldenummer: 07023521.3
(22) Anmeldetag: 05.12.2007
(51) Int. Cl.: B60R 21/13

(54) **Sicherheitseinrichtung zum Schutz von Insassen eines Kraftfahrzeuges bei einem Fahrzeugüberschlag**

(30) Priorität: 23.03.2007 DE 102007014125
(71) Anmelder: Dr. Ing. h.c. F. Porsche Aktiengesellschaft, 70435 Stuttgart (DE)
(72) Erfinder: Brandsch, Hermann, 70499 Stuttgart (DE); Wetzel, Stephan, 71287 Weissach (DE); Kane, Martin, 71739 Oberriexingen (DE)

(57) **Zusammenfassung**

Bei einer Sicherheitseinrichtung zum Schutz von Insassen eines Kraftfahrzeuges bei einem Fahrzeugüberschlag weist ein Fahrgastraum des Kraftfahrzeuges im Bereich der Seitenwände Türen mit aus Glas gefertigten Seitenscheiben auf. Damit ein Herausschleudern von nicht angeschnallten Insassen durch die Seitenscheiben aus dem Fahrgastraum zuverlässig vermieden wird, ist vorgesehen, dass die Seitenscheiben aus einem speziellen Verbund-Sicherheitsglas z.B. mit hochfesten lonoplast-Zwischenlagen hergestellt sind und dass bei einem Fahrzeugüberschlag den Seitenscheiben zusätzlich tür- und/oder sitzseitig integrierte Seitenaufprallschutzeinrichtungen zugeordnet sind.

## Beschreibung

Die Erfindung betrifft eine Sicherheitseinrichtung zum Schutz von Insassen eines Kraftfahrzeuges bei einem Fahrzeugüberschlag, wobei eine Fahrgastzelle des Kraftfahrzeuges im Bereich der Seitenwände Türen mit aus Glas gefertigten Seitenscheiben aufweist.

In vielen Ländern besteht für die Insassen eines Kraftfahrzeuges Anschnallpflicht, so dass die durch ein Sicherheitsgurtsystem angeschnallten Insassen bei einem Fahrzeugüberschlag geschützt auf ihren Sitzen innerhalb der Fahrgastzelle verbleiben. In einigen Gebieten, beispielsweise in mehreren Bundesstaaten der USA, existiert jedoch keine Anschnallpflicht für die Fahrzeuginsassen eines Kraftfahrzeuges.

Bei nicht angeschnallten Insassen eines Kraftfahrzeuges kann es unter ungünstigsten Umständen vorkommen, dass die meistens aus einem Einscheiben-Sicherheitsglas gefertigten Seitenscheiben bei einem Fahrzeugüberschlag zerbersten und dass die unangeschnallten Insassen durch die nunmehr vollständig freiliegenden Karosserieöffnungen der Seitenscheiben aus dem Fahrgastraum herausgeschleudert werden und dabei schwere Verletzungen erleiden.

Aufgabe der Erfindung ist es, an einem Kraftfahrzeug solche Vorkehrungen zu treffen, dass ein Herausschleudern von nicht angeschnallten Insassen durch die Seitenscheiben aus dem Fahrgastraum des Kraftfahrzeuges zuverlässig vermieden wird.

Erfindungsgemäß wird diese Aufgabe durch die Merkmale des Anspruchs 1 gelöst. Weitere die Erfindung in vorteilhafter Weise ausgestaltenden Merkmale enthalten die Unteransprüche.

Die mit der Erfindung hauptsächlich erzielten Vorteile sind darin zu sehen, dass insbesondere durch die Ausbildung der Seitenscheiben des Fahrzeuges aus einem speziellen Verbund-Sicherheitsglas, z.B. mit hochfesten lonoplast-Zwischenlagen, ein Herausschleudern der Insassen aus dem Fahrgastraum zuverlässig vermieden wird. Die dergestalt ausgebildeten Seitenscheiben sind wesentlich stabiler und weisen eine deutlich höhere Schlagzähigkeit auf, als Verbundglasscheiben mit herkömmlichen PVB-Zwischenlagen, so dass die Seitenscheiben bei einem Fahrzeugüberschlag nicht labil werden, sondern auch nach der Belastung stabil bleiben.

Die Schutzwirkung für nicht angeschnallte Insassen des Kraftfahrzeuges wird zusätzlich dadurch erhöht, dass jeder Seitenscheibe bei einem Fahrzeugüberschlag eine tür- und/oder sitzseitig integrierte Seitenaupfrallschutzeinrichtung zugeordnet ist, die den Kopfbereich und den Thoraxbereich der Insassen schützt.

In der Erfindung wird ein Ausführungsbeispiel der Erfindung gezeigt, das nachstehend näher beschrieben wird. Es zeigen
- Fig. 1: einen Querschnitt durch einen Aufbau eines Kraftfahrzeuges mit der erfindungsgemäßen Sicherheitseinrichtung

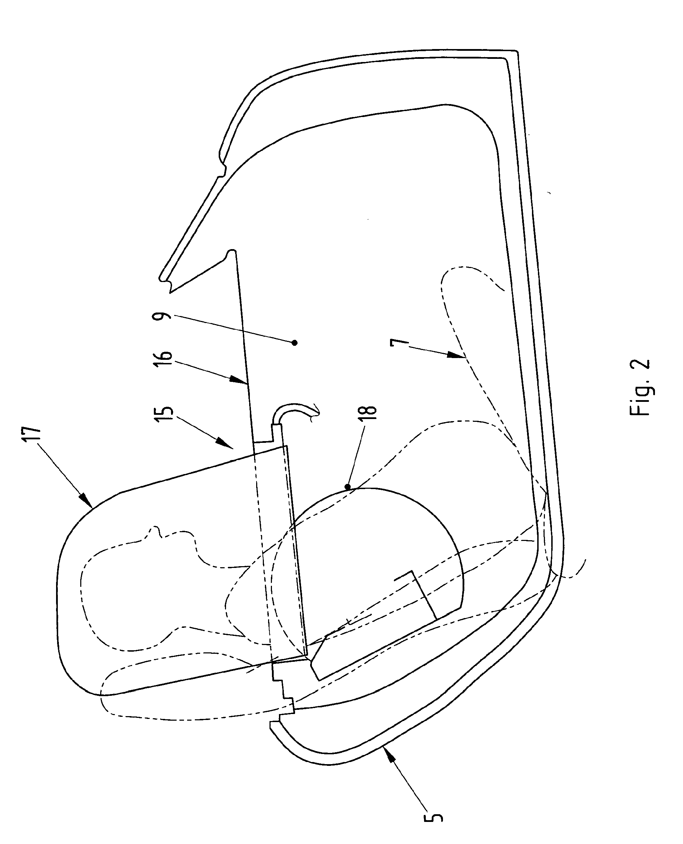

- Fig. 2: eine Ansicht in Pfeilrichtung A der Fig. 1
- Fig. 3: einen Schnitt nach der Linie III-III der Fig. 1 durch die Seitenscheibe in größerer Darstellung und um 90° gedreht.

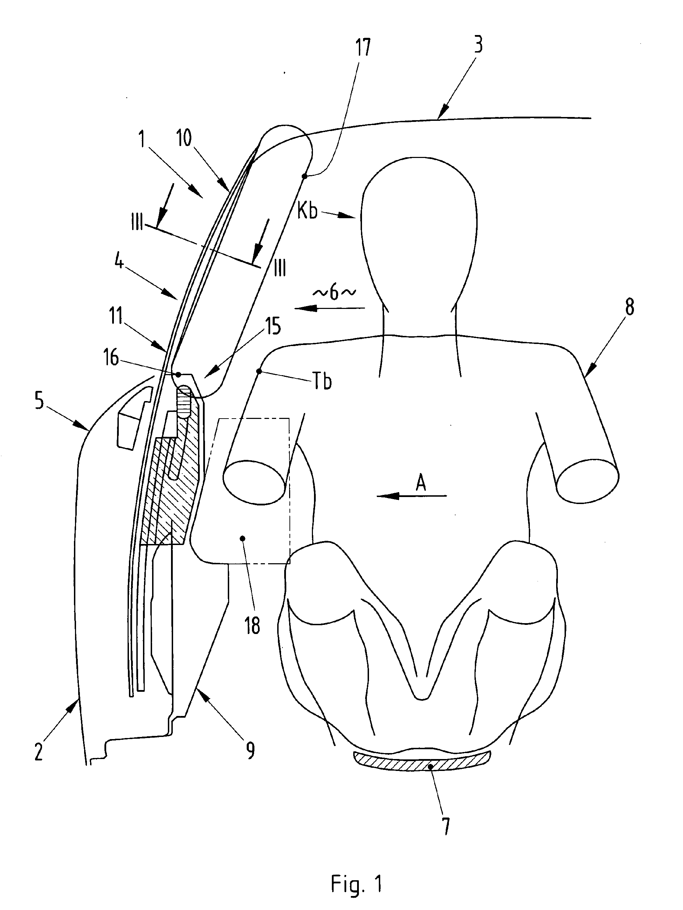

Ein Kraftfahrzeug 1 umfasst einen Aufbau 2 mit einem Dach 3 und einer Seitenwand 4, in die eine Tür 5 eingesetzt ist - Fig. 1 -.

Die Tür 5 begrenzt einen Fahrgastraum 6 für wenigstens einen auf einem Sitz 7 ruhenden Insassen 8 und weist einen Türkörper 9 und eine Seitenscheibe 10 auf, die im besagten Türkörper 9 versenkbar angeordnet ist. Zum Schutz der nicht angeschnallten Insassen bei einem Fahrzeugüberschlag (Rollover), insbesondere bei einem Fahrzeugüberschlag in Fahrzeugquerrichtung, ist eine Sicherheitseinrichtung 11 vorgesehen.

Die Sicherheitseinrichtung 11 wird einerseits durch die Ausbildung der Seitenscheiben 10 aus einem speziellen Verbund-Sicherheitsglas, mit einer hochfesten Kunststoff-Zwischenlage 12 gebildet, z.B. einem lonoplast. Gegenüber herkömmlichen PVB-Zwischenlagen ist eine hochfeste lonoplast-Zwischenlage 12 wesentlich zäher und steifer, so dass die Seitenscheiben 10 bei einem Fahrzeugüberschlag nicht labil werden, sondern weitgehend stabil bleiben.

Dadurch ist sichergestellt, dass unangeschnallte Insassen 8 bei geschlossenen Seitenscheiben 10 nicht durch die türseitigen Karosserieöffnungen der Seitenscheiben 10 aus dem Fahrgastraum 6 herausgeschleudert werden können.

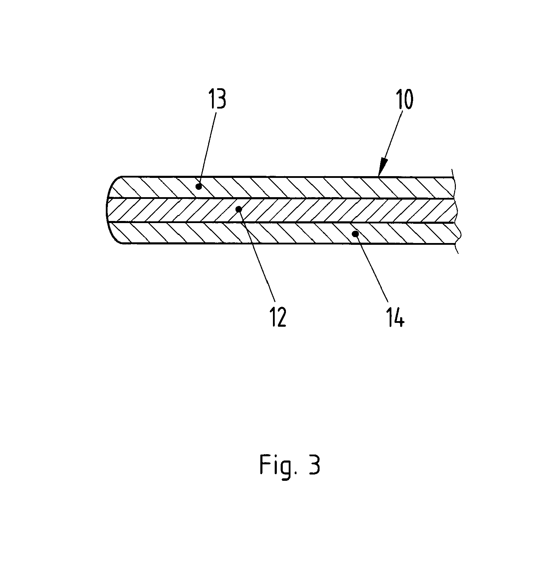

Der prinzipielle Aufbau der Seitenscheiben 10 ist in Fig. 3 näher dargestellt. Jede Seitenscheibe 10 umfasst mindestens zwei äußere Glasscheiben 13, 14, die durch eine hochfeste klebfähige Zwischenschicht, z.B. eine hochfeste lonoplast-Zwischenlage 12, verbunden sind. Eine derartige Verbundglasscheibe stellt beispielsweise das Produkt Sentry Glas Plus (SGP) von DuPont dar. Anstelle der lonoplast-Zwischenlage 12 können selbstverständlich auch andere Zwischenschichten mit ähnlichen Materialeigenschaften verwendet werden.

Die Sicherheitseinrichtung 11 wird andererseits durch eine den Seitenscheiben 10 zugeordnete Seitenaufprallschutzeinrichtung 15 gebildet, wobei die Seitenaufprallschutzeinrichtung tür- und/sitzseitig integriert ist. Die Seitenaufprallschutzeinrichtung 15 dient vor allem dem Schutz des Thorax-Bereiches Tb bzw. des Kopfbereiches Kb des Insassen 8 und wirkt wie ein im Kraftfahrzeugbau unter dem Begriff Airbag bekanntes passives Sicherheitssystem, bei dem unter dem Einfluss einer Fahrzeugkollision ein pyrotechnischer Treibstoff gezündet wird, wodurch in Sekundenbruchteilen ein zusammengelegter Schutzsack aufgeblasen wird.

Im Ausführungsbeispiel umfasst die Seitenaufprallschutzeinrichtung 15 einen im Bereich der Brüstung 16 der Seitenwand 4 bzw. der Tür 5 angeordneten nach oben entfaltbaren Kopfairbag 17 mit einer ersten Aufblaseinrichtung und einen aus dem Sitz 7 seitlich heraus entfaltbaren Thoraxairbag 18 mit einer zweiten Aufblaseinrichtung. Eine derartige Seitenaufprallschutzeinrichtung ist beispielsweise der DE 102 57 248 A1 entnehmbar.

## Patentansprüche

1. Sicherheitseinrichtung zum Schutz von Insassen eines Kraftfahrzeuges bei einem Fahrzeugüberschlag, wobei ein Fahrgastraum des Kraftfahrzeuges im Bereich der Seitenwände Türen mit aus Glas gefertigten Seitenscheiben aufweist, **dadurch gekennzeichnet, dass** die Seitenscheiben (10) aus einem speziellen.
Verbund-Sicherheitsglas mit einer hochfesten Kunststoff-Zwischenlage (12) hergestellt sind und dass bei einem Fahrzeugüberschlag den Seitenscheiben (10) zusätzlich tür- und/oder sitzseitig integrierte Seitenaufprallschutzreinrichtungen (15) zugeordnet sind.

2. Sicherheitseinrichtung nach Anspruch 1, **dadurch gekennzeichnet, dass** die hochfeste Kunststoff-Zwischenlage (12) aus einem lonoplast oder einem PE lonomer hergestellt ist.

3. Sicherheitseinrichtung nach Anspruch 1, **dadurch gekennzeichnet, dass** die Seitenaufprallschutzeinrichtung (15) einen im Bereich der Brüstung (16) der Tür (5) angeordneten, nach oben entfaltbaren Kopfairbag (17) mit einer ersten Aufblaseinrichtung und einen aus dem Sitz (7) seitlich heraus entfaltbaren Thoraxairbag (18) mit einer zweiten Aufblaseinrichtung umfasst.
